# EUROPEAN PATENT APPLICATION

(11) **EP 4 422 136 A1**
(43) Date of publication of application: **28.08.2024**
(21) Application number: 23158816.1
(22) Date of filing: 27.02.2023
(51) Int. Cl.: H04L 41/0894

(54) **METHOD FOR LINKING A DIGITAL TWIN TO A SUBSYSTEM OF A REAL SYSTEM AND TWIN ABSTRACTION INTERFACE**

(71) Applicant: Siemens Aktiengesellschaft, 80333 München (DE)
(72) Inventor: Blenk, Andreas, 86916 Kaufering (DE); Zeiger, Florian, 85635 Höhenkirchen-Siegertsbrunn (DE)
(74) Representative: Siemens Patent Attorneys

(57) **Abstract**

The invention is related to a method for linking a digital twin (2) to a subsystem (3) of a real system (4), wherein the digital twin (2) is linked to a subsystem (3), representing a selected group of the one or more objects (5) of the real system (4) defined by a twin configuration (8), wherein update data (11), depending on the object data (7), is provided by the respective object module (6); the update data (11) is received and adapted to subsystem update data (13) according to the twin configuration (8) by a the digital twin abstraction interface (1); the subsystem update data (13) is transmitted to the digital twin module (10); and the digital twin module (10) updates the twin data (9) dependent on the received subsystem update data (13).

## Description

The invention is relates to a method for linking a digital twin to a subsystem of a real system and a twin abstraction interface.

A digital twin generally relates to a digital representation of a real object or a real system. The digital twin may be used to characterise a current state of the real object or the real system. The digital twin may be used to represent and to characterise the current state of a digital asset object or a metaverse. In order to synchronise the current state of a digital twin with the current state of a real object or a real system, including a digital asset object or a metaverse, the digital twin may be supported by object dependent update data describing the current state of the real object or the real system, respectively the digital asset object or the metaverse. The update data may comprise sensor data or operational data of the real object. The use of digital twins enables monitoring of the real object or real system, respectively the digital asset object or the metaverse.

Digital twins are currently used in many operational services such including design, testing, maintenance monitoring and failure prediction. Due to the successful application and use of digital twins in many application areas, more and more real components are being digitised and digital counterparts are being created. One example is digital twins of real networks, leading to the creation of so-called digital network twins.

A digital network twin (DNT) is connected to one or more network components. Together, these components represent and provide a functionality of the real network. The digital network twin can be the digital representation of a single network device, such as a network switch or router. It can also represent pre-defined parts of the real network, or the entire real network consisting of many network elements. The desired functionality of the digital network twin depends on the scope of the operator creating the digital network twin. For example, an operator may request a complete view of a network element, including ingress queues, traffic managers and egress queues. The operator could also request an abstract view of a network element. In the second case, a digital network twin may only represent the ingress and egress behavior of network packets, for example, on which ports packets enter, how long they are processed, and on which ports packets leave a switch. In this case, the inner workings and performance modelling are abstracted. In a third scenario, an operator may require a complete abstract view of a network, such as an industrial network connecting field levels with data center infrastructure, or an autonomous system consisting of multiple routers. In this case, the entire network could again be represented as a digital model describing only the ingress and egress relationship for network packets.

Digital network twins are described in the publication "Digital Twin Network: Concepts and Reference Architecture" published by the Internet Research Task Force.

One problem with the current operation of digital network twins is the inability to flexibly create and combine the digital network twins to represent the network. Digital twin operators are burdened with creating digital network twins that match their intent and the physical computer network infrastructure. However, due to the complexity of communication networks, digital twin operators are not always interested in having a digital twin component of every single network element. For example, instead of representing each router/switch of multiple sub-networks, a digital twin operator may be interested in a combined view of such sub-networks.

It is an object of the present invention to provide a solution for a flexible provision of digital twins for subsystems or objects of a real system or a metaverse.

This objective is achieved by the respective subject matter of the independent claims. Further implementations and preferred embodiments are subject matter of the dependent claims.

A first aspect of the invention relates to a method for linking a digital twin to a subsystem of a real system. In other words, the method relates to a provision of the digital twin representing the subsystem of the real system. The real system may be a physical system or a system of digital assets in a metaverse.

One or more objects of the real system are each connected to respective object modules configured to provide object data. The object data specify a current state of the respective object. In other words, the object modules are assigned to the objects of the real system, wherein the current state of each object is described in the object data, provided by the object module. The digital twin is linked to the subsystem, wherein the subsystem comprises a selected group of the one or more objects of the real system. The one or more objects of the subsystem are defined by a twin configuration. In other words, the digital twin is a digital representation of the subsystem, wherein the subsystem comprises a selection of the one or more predefined objects of the real system. Twin data specifying a current state of the digital twin is stored in a digital twin module. In other words, the current state of the digital twin of the subsystem is described in twin data, stored in the twin module of the digital twin.

Update data, depending on the object data, is provided by the respective object module. The object data may be provided to a communication network by the respective object module. The update data is received by a digital twin abstraction interface from the communication network. In other words, the object module creates the update data, wherein the update data depend on the object data. The object module transmits the update data to the digital twin abstraction interface via the communication network. The update data may include raw data provided by the object module.

The update data is adapted to subsystem update data according to the twin configuration by a core operation and management module of the digital twin abstraction interface. The subsystem update data is transferred to the digital twin module. The digital twin module updatees the twin data according to the received subsystem update data. In other words the twin configuration describes an adaption to be performed by the core operation and management module of the digital twin abstraction interface to generate subsystem update data to update the twin data describing the current state of the twin. The twin configuration may describe a selection of the update data and/or a quantity of the update data necessary to update the current state of the digital twin. The core operation and management module of the digital twin abstraction interface adapts the update data according to the twin configuration of the twin and sends the subsystem update data to the twin module of the twin. The adaptation of the update data may include filtering, conversion or deletion of update data. The twin module receives the subsystem update data and adapts the twin data depending on the update data to update the current state of the twin representing the subsystem.

The digital twin abstraction interface, the object module and the digital twin module can also be represented by a software or separate hardware module. A combination may also be possible. The object data and the digital twin data may also represent physical parameters such as dimensions, velocities, pressures and/or the like. Preferably, the object data may comprise one or more sensor data provided by respective sensors detecting specific dimensions of the real object. Also preferably, the digital twin data may comprise data which may represent the real object. In this respect, the twin data may comprise more information than the object data.

The update data may be data which may depend on the object data. In particular, the update data corresponds to data indicating a change of the current state of the object data or twin data. The update data may be data that allows the twin data to be modified so that the current states of the real object and the digital twin match. However, the update data may also comprise partial or complete object data. The subsystem update data may comprise unchanged data of the update data provided by the object module of the object of the subsystem. The subsystem update data may also comprise converted data of the update data provided by the object module of the object of the subsystem or data generated by the digital twin abstraction interface based on the update data. A content and/or a structure of the subsystem update data may be defined in the twin configuration of the twin associated with the respective subsystem.

The invention has the advantage that the subsystem update data necessary to update the twin data is provided by the digital twin abstraction interface according to the needs of the digital twin. This approach of providing the update data is advantageous in many ways. The update data is provided centrally by the digital twin abstraction interface, which means that it is not necessary to provide the individual twin module with a separate update mechanism. This means that the communication network is not blocked by the update mechanism, but several twin modules can be provided with the respective update data in parallel. Furthermore, not all update data of the object modules have to be transmitted to the twin module. The interface can provide exactly the update data to the twin modules that is required to map the respective subsystem by the twin.

The invention also comprises embodiments that provide features which afford additional technical advantages.

According to a further embodiment of the invention, the method comprises a step of receiving a twin intent by the core operation and management module of the digital twin abstraction interface. The twin intent is an order for the core operation and management module of the digital twin to provide the digital twin of the subsystem. In other words, the core operation and management module receives the twin intent. The twin intent may be a message provided by an operator who wishes to run the digital twin. The twin intent may comprise specifications for the digital twin to be provided. The twin intent may determine the one or more objects of the subsystem a update rate of a synchronization of the twin data describing the current state of the twin and parameters of the subsystem to be represented by the twin.

According to the embodiment, the method comprises a step of providing the twin configuration according to the twin intent by the core operation and management module. In other words, the core operation and management module provides the twin configuration specifying the twin to be created according to the twin intent. The core operation and management module may extract the specifications of the twin intent and adapt the specifications according to the one or more objects of the subsystem or the real system in general. The twin configuration may be a network specific configuration specifying the subsystem update data needed to operate the twin as expected.

In a next step, the core operation and management module creates the twin module to store the twin data that specifies the current state of the digital twin according to the twin configuration. In other words, the core operation and management module initiates a twin instance to operate the twin by setting up the twin module to store twin data specifying the current state of the digital twin. The twin module may be operated in a specific computing device.

The embodiment has the advantage that the twin configuration and the setup of the digital twin is performed by the core operation and management according to the operator's needs. This means that the operator does not have to configure the settings that depend on the specific network or the individual objects of the subsystem in order to initiate the session with the digital twin.

According to a further embodiment of the invention, the method comprises a step of checking of available twin configurations, stored in a catalogue of digital twins of the abstraction interface for compatibility with the twin intent, by the Core operation and management module. In other words, the core operation and management module determines whether one of the available twin configurations in the catalogue of digital twins meets the specifications as described in the twin intent. The available twin configuration may be compatible to the twin intent, if the available twin configuration allows a generation of a twin that fulfils the twin intents needs. The catalogue of digital twins comprises available twin configurations describing the respective twins. The available twin configurations can be predefined twin configurations, twin configurations of twins of former twin instances or of active twins. The method comprises the step of selecting by the core operation and management module one of the available twin configurations compatible with the twin intent. If at least one of the available twin configurations satisfies the specifications of the twin intent, the core operation and management module selects one of the available twin configurations to use the respective available twin configuration as the twin configuration to be provided according to the twin intent. The embodiment has the advantage that pre-existing available twin configurations are used to provide the twin configuration for the twin intent. This may reduce an amount of resources, because it is not required to generate the twin configuration from zero.

According to a further embodiment of the invention, the provision of the twin configuration comprises a step of adapting the at least one compatible available twin configuration to the twin configuration depending on the twin intent. In other words, the core operation and management module adapts the at least one compatible twin configuration depending on the twin intent to provide the twin configuration according to the twin intent. The embodiment has the advantage that an amount of provisioning of the respective twin configuration can be reduced by adapting pre-existing twin configurations.

According to a further embodiment of the invention, the method comprises a step of comparing a compatibility of available twin configurations of respective twins stored in a catalogue of digital twins of the abstraction interface for an inclusion in the twin configuration by the core operation and management module. In other words, the core operation and management module verifies whether one or more available twin configurations can be included in the twin configuration for the twin intent. The available twin configurations may define available twins to represent one or more objects of the subsystem to be represented by the twin according to the twin intent. The available twin configurations may also describe a particular aspect of the subsystem or the objects of the subsystem. Therefore one or more of the available twins may be used as atomic twin configurations to build the twin configuration. As an example the core operation and management module may select at least two of the available twin configurations that are compatible with the twin intent and may combine the two selected available twins to generate the new twin configuration. In other words, the twin configuration is provided by the core operation and management module by means of an inclusion of the at least one of the available twin configurations or by a combination of at least two of the available twin configurations. The embodiment has the advantage that certain aspects of the twin configuration can be provided by pre-existing available twin configurations.

According to a further embodiment of the invention, the provision of the twin configuration comprises a step of creating the twin configuration according to the twin intent by a creation module of the digital twin abstraction interface. In other words, the core operation and management module controls the creation module to generate the twin configuration according to the twin intent. The creation module may generate the twin configuration for the twin intent from zero. The embodiment has the advantage that the twin configuration based on the twin intent can be generated by the creation module of the digital twin abstraction interface.

According to a further embodiment of the invention, the method comprises a step of a configuring of a network module of the abstraction interface by the Core operation and management module to provide the update data to the Core operation and management module according to the at least one twin configuration by the Core operation and management module. In other words, the twin configuration defines the subsystem update data to be provided to the digital twin assigned to the subsystem. To enable the provision of the subsystem update data in accordance with the twin configuration, the Network module may configure a monitoring network to provide the update data to the abstraction interface that is required to provide the subsystem update data to the twin module according to the twin configuration. The abstraction interface connects to the twin module to provide the subsystem update data to the twin module. In other words, the abstraction interface is connecting to both the physical computer network comprising the object module and the twin modules. It may act as a physical intermediate layer between the object module and the twin module. With this, the abstraction interface configures, controls, and monitors the access of multiple operators to the physical computer network infrastructure. As a result, operators can receive digital twins from the same network infrastructure in parallel without any interference or waste of resources like network capability, CPU or memory. The transmission of the update data to the abstraction interface may comprise a direct provision of the update data to the Core operation and management module.

According to a further embodiment of the invention, the method comprises a step of storing at least part of the update data in a network memory of the abstraction interface. In other words, the abstraction interface stores or caches at least part of the update data before providing the update data to the core operation and management module. The embodiment has the advantage that the update data can be made available to the core operation and management module when it is needed, regardless of an update rate of the update data.

According to a further embodiment of the invention, the method comprises a step of a configuration of the monitoring network by the abstraction interface to transmit a part of the update data of the object module to the twin module. In other words, the abstraction interface configures the monitoring network to provide a direct transmission of the update data to the twin module. The abstraction interface configures the monitoring network such that the update data comply with the subsystem update data according to the twin configuration. The transmission may be set to send the update data directly to the twin module without passing the abstraction interface.

According to a further embodiment of the invention, the step of the adaptation of the update data comprises a step of abstracting the update data according to a level of abstraction of the twin configuration. In other words, the twin configuration defining the respective twin defines a level of abstraction of the subsystem update data. In other words, an amount and/or an accuracy of the subsystem update data provided to the twin module is defined in the twin configuration. The level of abstraction may, for example, be defined so that every state of the objects of the subsystem is described in the twin and every interaction of the objects of the subsystem is represented by the subsystem. Conversely, it may also be possible that the twin representing the subsystem receives subsystem update data describing only an input and/or output of the subsystem comprising the objects without comprising update data describing status of one of the objects or processes of one of the objects within the subsystem.

According to a further embodiment of the invention, the adaptation of the update data comprises a pass-through of the update data. In other words, at least a portion of the update data provided to the abstraction interface is passed to the twin module as subsystem update data without any adaptation of the update data. Therefore, the twin data can be updated using the original update data. This may be advantageous if the twin represents a detailed current state of the subsystem or if the twin module includes a corresponding adaptation module.

According to a further embodiment of the invention, the method comprises a step of sending the subsystem update data to the digital twin abstraction interface by the digital twin module depending on the twin data describing the status of the digital twin. The subsystem update data is received by the digital twin abstraction interface and adapted to the update data according to the twin configuration by the core operation and management module of the digital twin abstraction interface. In other words, in addition to updating the current state of the twin according to the current state of the object, the method includes steps to adjust the current state of the object according to the current state of the twin. For this purpose, the twin module sends subsystem update data to the digital twin abstraction interface depending on the twin data. The core operation and management module of the digital twin abstraction interface converts the adapted update data into update data according to the twin configuration, and the update data is transmitted to the object module via the communication network. The update data is received by the object module. The object module adapts the current state of the real object depending on the received update data. The adaption of the current state of the object may be performed by sending control data to the object by the object module. The control data may change settings of the object to change the current state of the object to fit with the current state of the digital twin. In other words, the method comprises steps for adapting the state of the real object according to the state of the digital twin. The invention has the advantage that it is possible to control a subsystem by means of the digital twin.

According to a further embodiment of the invention, the one or more objects of the real system comprise at least one physical object. In other words at least one of the objects of the real system is the physical object. The physical object may be a robot, a physical electronic device or a hardware device.

According to a further embodiment of the invention, the one or more objects of the real system comprise at least one digital asset. In other words at least one of the objects of the real system is the digital asset. The digital asset may be a digital object in an industrial metaverse environment or a cyberspace.

For use cases or use situations that may arise during the procedure and that are not explicitly described here, it may be provided that, according to the procedure, an error message and/or a request for user feedback is issued and/or a default setting and/or a predetermined initial state is set.

A second aspect of the invention relates to a digital twin abstraction interface configured for linking digital twin with the subsystem of system. The digital twin abstraction interface is configured to receive update data from an object module. The update data may depend on object data specifying the current state of the object of the subsystem connected with the object module. The twin abstraction interface is configured to adapt the update data to subsystem update data according to a twin configuration of the digital twin. The twin abstraction interface is configured to send the subsystem update data to the twin module of the digital twin, configured to store the digital twin data of the digital twin linked to the subsystem.

Independent of the grammatical term usage, individuals with male, female or other gender identities are included within the term.

The term module can be understood as a hardware module or as a software module. In particular, a module may also comprise a hardware and a software portion implemented on the hardware.

A software module may be understood as a portion of software code functionally connected and combined to a unit. A software module may comprise or implement several processing steps and/or data structures. A method step of providing a software module may be understood to comprise providing a respective software code in a computer readable fashion on a computer readable storage medium.

A computing unit may in particular be understood as a data processing device, which comprises processing circuitry. The computing unit can therefore in particular process data to perform computing operations. This may also include operations to perform indexed accesses to a data structure, for example a look-up table, LUT. In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
- FIG 1: shows a schematic illustration of a digital twin linked to an object of a real system according to the state of the art;
- FIG 2: shows a schematic illustration of a method to link a digital twin to an object of a real system according to the state of the art;
- FIG 3: shows a link between a real system with digital twins via a Network management system or a general monitoring system according to the state of the art;
- FIG 4: shows a schematic illustration of Different level of abstractions of a network including devices;
- FIG 5: shows a schematic illustration of the digital twin abstraction interface;
- FIG 6: shows a schematic illustration of a method;
- FIG 7: shows an integration of a digital network abstraction interface into an existing network management system;
- FIG 8: shows another integration of a digital network abstraction interface into an existing network management system; and
- FIG 9: two modes of transmission of update data to twin modules.

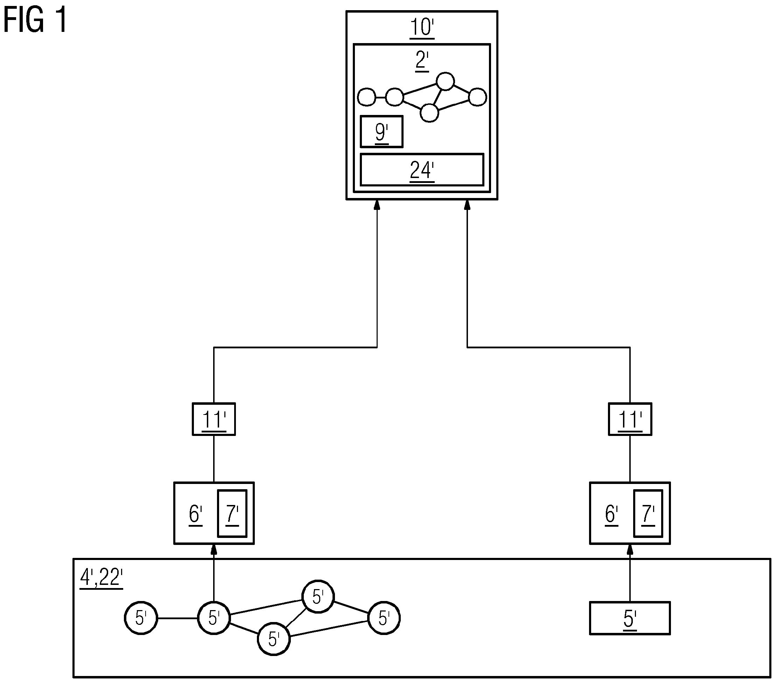

FIG 1 shows a schematic illustration of a digital twin linked to an object of a real system according to the state of the art.

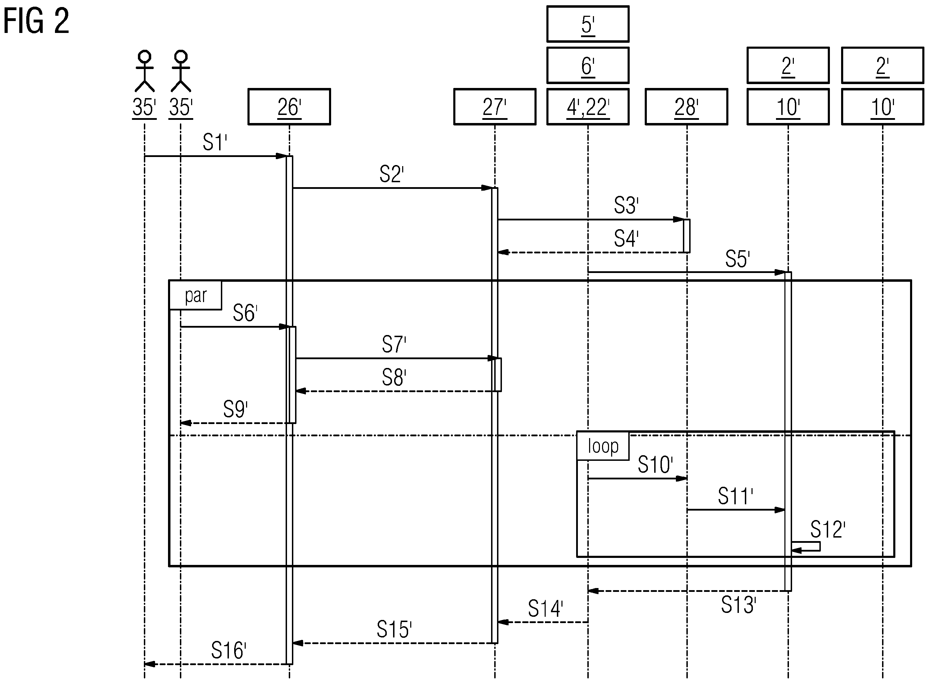

The digital twin 2' shown in FIG 1 may be updated in a system shown in FIG 2.

The digital twin 2' may be configured to mimic a current state of the respective real object 5'. The representation of the real object 5' by the digital twin 2' may enable monitoring of the real object 5' by an operator 35' of the digital twin 2'. The digital twin 2' shown in FIG. 1 may be linked to the object 5' of the real system 4'. The real system 4' may be a physical computer network 22'. The object 5' of the real system 4' may be a network node of the physical computer network 22'. The physical computer network 22' may be configured to connect objects 5' such as network nodes and devices such as robots. The objects 5' may be connected to corresponding object modules 6'. The object modules 6' may be configured to store object data 7' describing a current state of the respective objects 5' of the real system 4'. The object data 7' may include parameters such as a temperature of the object 5', an available memory of the object 5', an amount of incoming data packets and/or outgoing data packets at the object 5'. The object modules 6' may be configured to transmit update data 11' depending on the object data 7' of the respective object 5' to a twin module 10' via a communication network 12'. The twin module 10' may be configured to store twin data 9' describing a current state of the digital twin 2' associated with the object 5' of the real system 4'. The twin module 10' may update the twin data 9' in accordance with the update data 11' to synchronise the current state of the twin 2' with the current state of the real object 5'.

In order to enable the synchronisation of the twin data 9', the twin module 10' may comprise an update logic 24' which may be configured to receive or fetch the update data 11' for the twin module 10' and/or to configure the object module 6' or a monitoring network 28' to provide the update data 11' to the twin module 10' according to a twin configuration 8'. The solution shown in FIG. 1 may have the disadvantage that the monitoring network 28' for providing the update data 11' may be blocked by the update logic 24' of the twin module 10' so that it may not be possible to operate another twin 2' at a same time.

According to the state of the art, network operators 35' either do not use a network management system or monitoring system 25', or they use a single element, such as a network management system, to retrieve data from the network elements. FIG 1 illustrates the first case, where the twin module 10' storing the twin data 9' of the digital twin 2' is directly connected to an infrastructure. In the case of using management or monitoring systems, the systems do not implement digital twin 2' abstraction capabilities that can be used by one or even several digital twin modules 10' in parallel.

Existing approaches either assume that only a single digital twin module 10' is connected to object modules 6' of the production network, or they provide an uncoordinated connection of multiple digital twin modules 10' to the object modules 6'. In the first case, the reason may be that only a single authority can technically connect to the network elements e.g. the firmware of a software-defined networking switch supports only one SDN controller. In this case, more than one digital twin module 10' cannot connect directly to the object modules 6' to retrieve update data 11' at runtime.

Without a monitoring or network management system in place, only one digital twin module 10' may be able to connect to the digital twin modules 10' of the physical infrastructure. The digital twin operator 35' is responsible for filtering and abstracting the relevant operation. If network elements only allow one simultaneous connection, only one digital twin 2' can be operated.

FIG 2 shows a schematic illustration of a method for linking a digital twin to an object of a real system according to the state of the art.

The method shown in FIG 2 can be used to link the real object 5' to the digital twin 2' shown in FIG 1.

In a first step S1', a production operator console 26' may receive input from an operator 35' wishing to operate a first twin 2'. The operator 35' may configure the twin configuration 8' of the first twin 2' to be provided. The twin configuration 8' may specify a real object 5' of a real system 4' to be represented by the first digital twin 2', settings of the twin data 9' and/or an update interval for synchronising the first twin 2' with the real object 5'. The twin configuration 8' may have to be generated according to the real object 5' and/or the real system 4'. In other words, the operator 35' may need to configure the twin configuration 8' according to the specific object 5' of the real system 4'.

Upon completion of the twin configuration 8' generation, the production operator console 26' may send the generated twin configuration 8' to a monitoring network controller 27' in a step S2' .

The monitoring network controller 27' may receive the twin configuration 8'. The monitoring network controller 27' may configure a monitoring network 28' according to the twin configuration 8' in a step S3'. The twin configuration 8' may determine a content and/or an amount of update data 11' to be provided by the monitoring network 28' to operate the twin 2' as requested by the twin configuration 8'.

Upon successful configuration of the monitoring network 28' by the monitoring network controller 27', the monitoring network controller 27' may set up the twin module 10' configured to store twin data 9' describing the current status of the first twin 2' representing the real object 5' according to the twin configuration 8' S4'.

In a step S5' the object module 6' that may be connected to the object 5' of the production network 4', 22' may build a connection to the twin module 10' of the first twin 2' through the monitoring network 28' to provide the update data 11' .

In a step S6', another operator 35' may configure a second twin configuration 8' at the production operator console 26'. The second digital twin 2' configuration may comprise settings of a second twin to be provided. The settings may determine the real object 5' of the real system 4' to be represented by the second digital twin 2', settings of the twin data 9' and/or an update interval for synchronising the second twin with the real object 5'.

In a step S7', the production operator console 26' may send the generated twin configuration 8' to the monitoring network 28' controller 27'.

In a step S8', the monitoring network controller 27' may refuse to initiate a second twin instance according to the second twin configuration 8' because the monitoring network 28' is already configured to provide the update data 11' to the twin module of the first twin 2'. The production operator console 26' may receive a rejection signal from the monitoring network controller 27' and provide an error message to the second operator 35'.

While the first twin instance is active, a loop comprising steps S10', S11' and S12' may be performed to update the current state of the first digital twin 2'.

In the step S10' the object module 6' of the respective object 5' of the real system 4' may generate update data 11' that depend on object data 7' describing a current state of the real object 5'. The update data 11' may be provided to the monitoring network 28'.

In the step S11' the monitoring network 28' may forward the update data 11' to the twin module 10'.

In the step S12' the twin module 10 'may receive the update data 11' and update the twin data 9' according to the update data 11'. In this way, the current state of the first twin 2 may be updated. The update data 11' may be provided to the twin module 10' of the first twin 2' at an interval set by the twin configuration 8' until a termination of the first twin instance.

In a step S13' the first twin instance may be terminated, and the connection between the object module 6' of the production network 4, 11 and the digital twin module 10' may be disconnected.

In a step S14' the object module 6' or the production network 4,11 may send a termination message to the monitoring network Controller 27' that the connection to the twin module 10 has been terminated.

In a step S15' the monitoring network controller 27' may inform the production operator console 26' that the first twin instance has finished. The production operator console 26' can send a termination signal to the first and/or second operator 35' indicating that the twin instance has been terminated.

In step S16', the production operator console 26' may give the operators 35' an output indicating that the first Twin instance has been terminated.

The example of FIG. 2 shows that in embodiments of the state of the art, it may not be possible to run two twin instances in parallel.

FIG 2 illustrates two operators 35' wishing to operate digital twins 2' for the same physical computer network 22' infrastructure. A first operator 35' provides the twin configuration 8' for its digital twin 2' operation. As no digital twin 2' is currently connected to the physical infrastructure, the request can be fulfilled. A second operator 35' then requests the operation of the second digital twin 2' according to the twin configuration 8' provided by the second operator 35'. As the physical computer network 22' only allows a single connection to the twin modules 10', the second operator's 35' request may be rejected. The second operator 35' may have to wait for the first twin's twin instance to complete before operating the second twin.

The first problem of the method is an inability to flexibly create and combine digital twins 2'. Here, digital twin operators 35' are imposed with the burden to create the respective digital twin configuration 8' that fits to their intent and to the physical computer network 22' infrastructure. Due to the complexity of networks, digital twin operators 35', however, are not always interested in having a digital twin 2' of every single network element. For example, instead of representing each router/switch of multiple subnetworks, a digital twin operator 35' might be interested in a combined view of subnetworks.

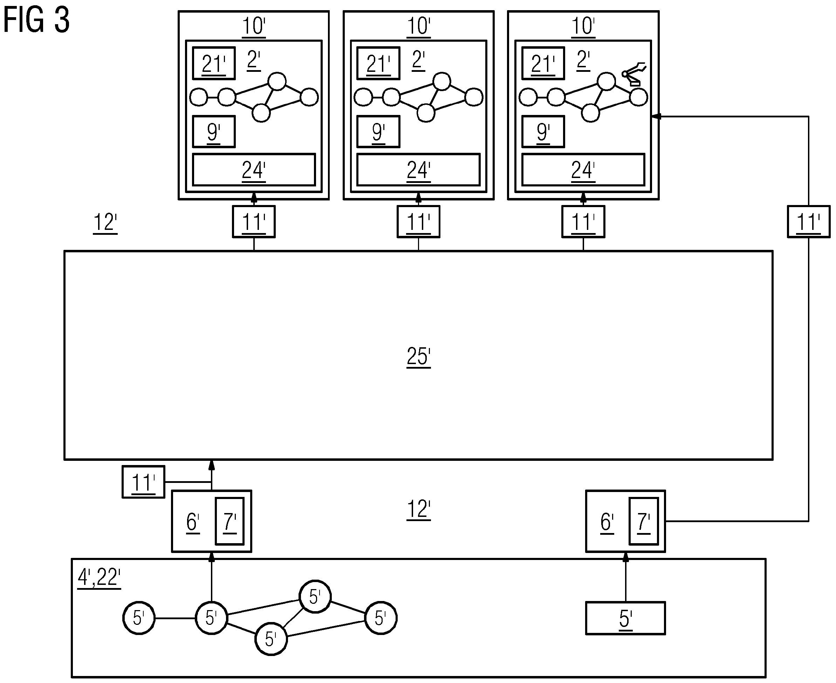

FIG 3 shows a link between a real system with digital twins via a network management system or a general monitoring system according to the state of the art.

The link between the real system 4' and the twin 2' may be provided via a Network management system or a general monitoring system 25'. The network management system 25' may be configured to receive the update data 11' provided by the object modules 6' connected to the objects 5' of the real system 4'. The Network management system 25' may be configured to provide the update data 11' to the update logics 24' of the respective twin modules 10' of the digital twins 2'. Contrary to the setup shown in FIG 1 the provision of the update data 11' may be performed through the network management system 25' and not by a direct connection between the twin module 10' and the object module 6'. Therefore the monitoring network 28' may not be blocked by the update logic 24 of one of the twin modules 10'. For this reason it may be possible to operate several instances of the digital twins 2' in parallel.

In case a network management system or a general monitoring system 25' already exists, the multiple digital twins 2' might fetch the update data 11' via the existing network management systems or the general monitoring systems 25#. Note, however, that there is no abstraction service or coordination according to the demands of the digital twin operators 35' in place. Again, the digital twin operators 35 are fully responsible for filtering the relevant update data to abstract the network according to their demands. Every digital twin module 10 needs its own update logic 24' to update the twin data 9' of the digital twins 2' after receiving all unfiltered update data 11'.

The uncoordinated access of digital twin modules 10 to the production network infrastructure can lead to multiple disadvantages. For instance, the monitoring network 28' has only limited network resources available; hence, only a maximum rate of update data 11' can be fetched from object modules 6' at runtime. In case two digital twin modules 10 request a higher rate of the update data 11' than the maximum rate, network operators 35 cannot guarantee an errorless operation. Another limited resource might be a switch CPU. To process network monitoring requests, switch CPUs need to handle the requests, potentially process the data already on the switch devices, and send back the information. Again, a simultaneous uncoordinated connection to switches might over utilize the CPU resources. Finally, if monitoring connections are not managed, redundant update data might be requested, processed, and transmitted - a waste of resources. The abstraction interface 1 overcomes the problem by adding an intermediate layer that connects itself to the object modules 6' of the physical computer network 22' in a coordinated manner to avoid any interference.

Current approaches assume that digital twin operators 35 completely configure and control their digital twins 2' according to the given physical computer network 22 infrastructure. However, this assumption has many disadvantages. In order to achieve a complete adaptation of digital twins 2', digital twin operators 35 would have to know, e.g., each single network element including their performance models. Moreover, digital twin operators 35 might lack knowledge about the in-teroperability of network elements, and accordingly, about the combination of digital twins 2'. For instance multiple network elements may represent a digital network element.

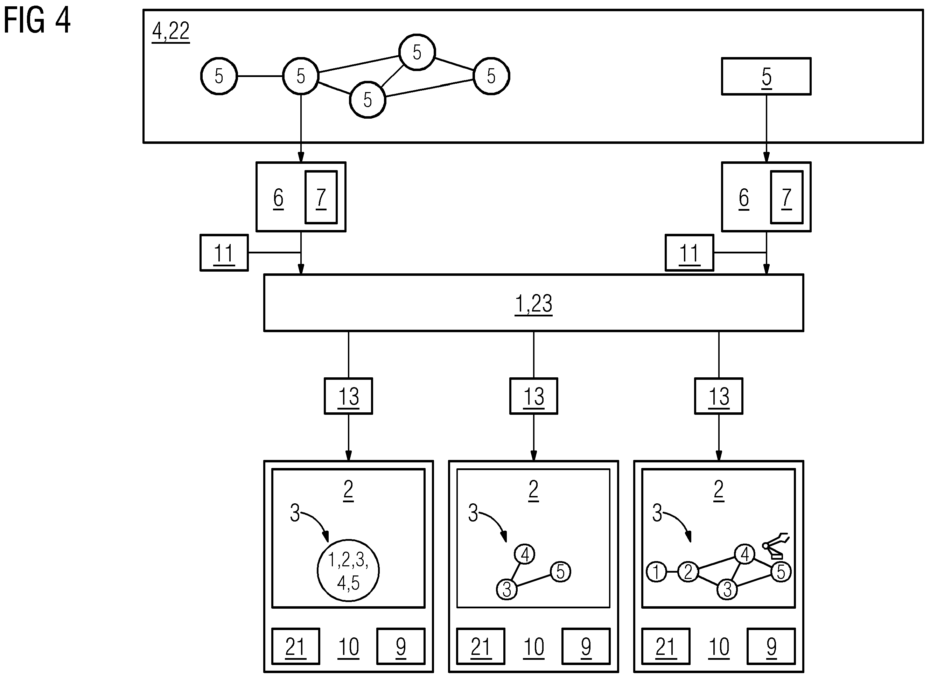

FIG 4 shows a schematic illustration of twins of different levels of abstraction.

There can be a level of abstraction 21 of a full abstraction without any representation of the single objects 5 of the real system 4. That may represent a current state of a physical computer network 22 without a consideration of the current states of single network nodes.

Another level of abstraction 21 may provide a partly abstraction of the real system 4 considering selected nodes of the physical computer network 22.

Another level of abstraction 21 may provide no abstraction, so that the current state of each of the objects 5 may be represented by the respective twin 2.

It may be necessary to provide several twins 2 of the real system 4. The twins 2 may be linked to respective subsystems 3 of the real system 4. The respective subsystem 3 may comprise one or more of the objects 5 of the real system 4. The respective subsystem 3 may be defined in a twin configuration 8 of the respective twin 2. The respective twin configuration 8 may also define the level of abstraction 21 of the twin 2. The level of abstraction 21 may define an abstraction or generalisation of the twin data 9 describing the current state of the twin 2 in relation to the object data 7 describing the current state of the subsystem 3.

One of the twins 2 may be linked to all objects 5 of the real system 4. The twin 2 may have a high or a full level of abstraction 21. The full abstraction may define that the twin 2 represents a current state of the real system 4, which may be limited to twin data 9 relevant for the overall current state of the real system 4 and/or a state of the real system 4 relevant for other systems, such as an input and/or output of the real system 4, without representing a state of the objects 5 of the real system 4 itself or without representing processes within the real system 4 that don't have an external effect.

One of the twins may be connected to a subsystem 3 of the real system 4, which may comprise selected objects 5 of the real system 4, but not all objects 5 of the system. The twin may have a level of abstraction 21 giving a partial abstraction. The twin data 9 of the twin may describe a current state of predefined clusters of objects 5 of the real system 4.

Another twin configuration 8 may describe that no abstraction of the physical computer network 22 needs to be provided. In other words, the twin data 9 may describe the current state of all objects 5 of the subsystem 3 without any abstraction.

The digital twin 2 may be a digital representation of one or many network components, which in total represent and provide the functionality of a network. As an example, a digital twin 2 can either be the digital representation of a single network entity such as a network switch, or it can represent parts of a network, or a whole network consisting of many network elements like switches or routers. Moreover, the requested digital twin 2 functionality depends on the intent of the digital twin operator 35. For instance, an operator 35 might request a complete view of a network element, including ingress queues, traffic managers, and egress queues; or a user might request an abstract view of a network element. In the second case, a digital twin 2 can represent only the in/out behavior for network packets; for instance, on which ports packets are coming in, how long they are being processed, and on which ports packets leave a switch. In such case, the inner working and performance modeling are abstracted. In a third scenario, the operator 35 might request a complete abstract view of a network, e.g., an industrial network 4 interconnecting field levels with data center infrastructure or an autonomous system consisting of multiple routers. In this case, the complete network 4 might be represented again as a digital model describing only the input/output relation for network packets.

The idea of the invention is a provision of the twin abstraction interface 1 to provide subsystem update data 13 to the twin modules 10 considering the level of abstraction 21 of the respective twin 2.

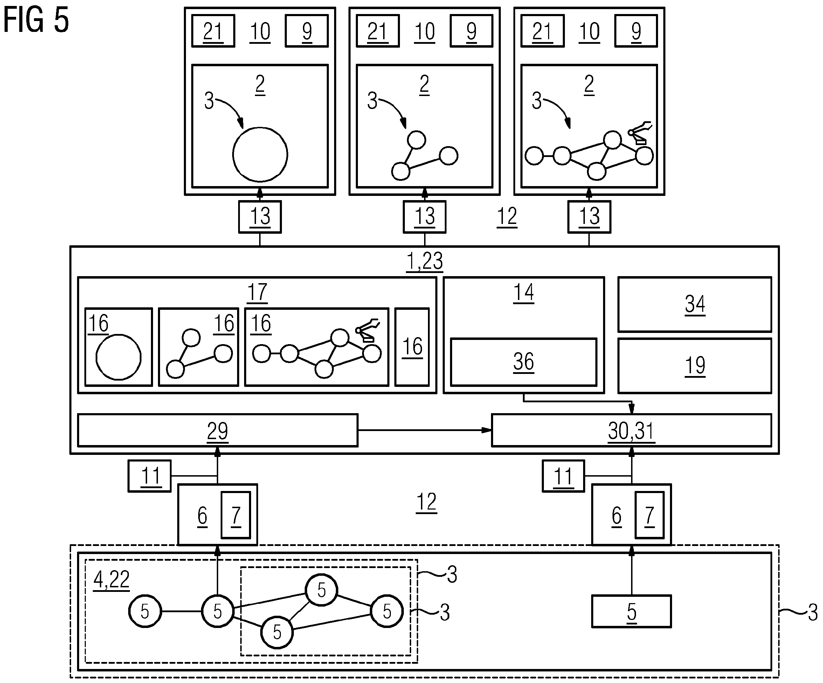

FIG. 5 shows a schematic illustration of the twin abstraction interface.

The figure shows the twin abstraction interface that can flexibly combine digital twins 2 and provide abstract views of such digital twins 2. The twin abstraction interface may be a module that acts as an intermediate layer between the physical computer network 22 containing the objects 5 to be twinned and the platforms that are used by the digital twin operators 35. The twin abstraction interface may connect to the physical computer network 22 and may receive all update data 11 of the object modules 6 of the objects 5 of the real system 4. The twin abstraction interface 1 may contain a catalogue of digital twins 17 of available digital twin configurations 16 related to the physical computer network 22. The twin abstraction interface 1 may provide mechanisms to automatically construct digital twin configurations 8 at runtime. That is, the twin abstraction interface 1 may use available twin configurations 16 as "atomic" available digital twin configurations 8 to provide the twin configuration 8. Moreover, based on a twin intent 15 of the digital twin operator 35, the twin abstraction interface may combine such available digital twin configurations 8 at runtime. In operation, the twin abstraction interface 1 may configure the monitoring network 28.

Two modes of operation may be provided by the twin abstraction interface 1. In the first mode of operation, the twin abstraction interface 1 configures the monitoring network 28 to connect the object modules 6 of the objects 5 of the physical computer network 22 to the twin modules 10. This operation may only be possible if isolation mechanisms on networking hardware to avoid interference between different connections are available.

In the second mode of operation, the twin abstraction interface 1 connects to both the object modules 6 of the objects 5 of the physical computer network 22 and the digital twin modules 10. In the second mode of operation the twin abstraction interface 1 may act as a physical intermediate layer. With this, the twin abstraction interface 1 configures, controls, and monitors the access of multiple digital twin modules 10 to the physical computer network 22 infrastructure. As a result, digital twin operators 35 may receive digital representations from the same network infrastructure in parallel without any interference or waste of resources with respect to networking, CPU or memory.

The twin abstraction interface 1 may comprise multiple modules including the catalogue of digital twins 17, the core operation and management module 14, the module to combine atomic digital twins 18, the module to create new digital twins 19, the network connection module 29 of a network module 20, and the network data store 31 of the network module 20. FIG. 5 shows three digital twins 2 connected with the twin abstraction interface 1. The digital twins 2 comprise respective twin configurations 8 with different levels of abstraction 21.

The catalogue of digital twins 17 may already contain the available twin configurations 16 to provide the requested digital twins 2, but also more available twin configurations 16. The three digital twins 2 may be registered internally within the core operation and management module 14 in a register of active twins 33.

A network connection module 29 may be responsible for the connection to fetch the update data 11. The update data 11 may be stored internally, e.g., in a database of the twin abstraction interface 1. In case the update data 11 describe changes of the object data 7, the core operation and management module 14 may fetch the update data 11 from the network data module 29 or the network data module 29 may inform the core operation and management module 14 about the changes of the object data 7.

The Core operation and management module 14 may be configured to receive the digital twin intents 15 generated by the operators 35. The Core operation and management module 14 may be configured to check whether one of the available digital twin configurations 16 in the catalogue of digital twins 17 is compatible to the twin intent 15. If one of the available digital twin configurations 16 is compatible to the twin intent 15, the Core operation and management module 14 may register the respective available digital twin configuration 16 as the twin configuration 8 of the twin intent 15. The Core operation and management module 14 may be configured to generate a twin module 10 of the twin 2 and to configure the at least one object module 6 of the at least one object 5 of the subsystem 3 to provide the update data 11 in a predefined update process according to the twin configuration 8.

The Core operation and management module 14 may be configured to trigger the creation module 19 to create a new digital twin configuration 8 according to the requirements of the twin intent 15.

The Core operation and management module 14 may be responsible for updating the twin data 9 of the digital twins 2 internally and, if requested, forwarding the twin data 9 to the digital twins 2 wherein both a push-based transmission and a pull-based transmission may be possible. Depending on the twin intent 15 of the digital twin operators 35, the Core operation and management module 14 may also forward the update data 11 to the digital twin modules 10. In this case, the digital twin module 10 must implement its own update mechanism or update logic 24.

The Catalogue of available network twins 17 may contain available digital twin configurations 16 related to the real system 4. The Catalogue of digital twins 17 may contain available digital twin configurations 8 defining atomic representations of twins of single objects 5 of the real system 4 as well as shared representations. The shared representations may represent a predefined group of objects 5 as one object 5. As an example, all network nodes of the physical computer network 22 may be represented as one network node.

A creation module 19 for creating digital twins 2 may contain a combination module 34 comprising a logic to combine available digital twin configurations 8 to provide the network twin configuration 8.

A network connection module 29 may handle the connection to the physical computer network 22, or to an existing monitoring system or network management system 25 providing update data 11, or to another entity such as a monitoring database providing update data 11.

A network data storage module 30 may be configured for responding to requests from the Core operation and management module 14 to provide update data 11 to the Core operation and management module 14 to allow the core operation and management module 14 to generate the subsystem 3 update data to update the digital twins 2. The network data storage module 30 may retrieve update data 11 from the internal network data store 31 or forwards requests to provide update data 11 to external data stores that may be included in the network management system or monitoring databases.

A Network Data Store 31 may hold update data 11 about the physical infrastructure 4 if no other data store is available.

An Interface to the monitoring network controller 27. The twin abstraction interface 1 may provide a requirements specification to the monitoring network controller 27. The monitoring network controller 27 may be a module to configure the monitoring network 28. The monitoring network controller 27 may be configured to provide feedback according to the operation and given intents of the digital twin operators 35.

These interfaces below may be implemented within the core operation and management module 14.

An interface to a configuration finder module. The twin abstraction interface 1may trigger a Configuration Finder Module to explore network configurations 32 according to the required fidelity of the digital twin operator 35. These interfaces are implemented in the core operation and management module 14.

The digital twin modules 10 of the digital twins 2 may connect to the twin abstraction interface 1. The twin abstraction interface 1 itself may connect to the object modules 6 of the objects 5 of the physical infrastructure 4. The twin abstraction interface 1 may provide necessary functions to abstract the update data 11 to subsystem 3 update data 13 representing the real network 4 and the objects 5 according to the requirements of the digital twin operators 35. Only demand-relevant update data 11 may be forwarded by the twin abstraction interface 1 to the twin modules 10.

The twin abstraction interface 1 may be connected to the physical infrastructure 4 via a dedicated monitoring network 28. It may therefore use mechanisms like a monitoring Network controller 27 and/or monitoring network configuration mapping. By using the available mechanisms, the twin abstraction interface 1 may provide the digital twins 2 as a service. This may eliminate a need for digital twin operators 35 to perform optimizations and to generate the twin configurations 8 themselves.

The twin abstraction interface 1 may be configured to receive the update data 11 of the physical computer network 4, 22. The physical computer network 22 may comprise objects 5 that may be assigned to object modules 6. The twin abstraction interface 1 may comprise twin configurations 8 to define subsystems 3 of the physical system 4, 22. The subsystems 3 may comprise all objects 5 of the physical computer network 22, a defined group of the objects 5 of the physical computer network 22 or the single object 5 of the digital network. The twin configuration 8 may determine a level of abstraction 21 of the respective digital twin 2. The twin abstraction interface 1 may be configured to receive update data 11 of the physical computer network 22.

The twin abstraction interface 1 may be configured to receive update data 11 that are necessary to generate the subsystem update data 13 for the twin modules 10 of the respective digital twins 2. The twin abstraction interface 1 may be configured to transmit the update data 11 to a network data store 31. The core operation and management module 14 of the twin abstraction interface 1 may be configured to fetch update data 11 from the monitoring network 28. The Core operation and management module 14 may be configured to adapt the update data 11 according to the twin configuration 8 to provide subsystem update data 13 to be provided to the respective twin modules 10. The twin modules 10 may be configured to store twin data 9 describing the current state of the respective twin 2.

The twin models 10 may be configured to update twin data 9 according to the received subsystem update data 13. The twin abstraction interface 1 may be configured to receive a twin intent 15. The twin intent 15 may define a subsystem 3 of the physical system to be represented by a digital twin 2. The twin intent 15 may also comprise a level of abstraction 21. The twin abstraction interface 1 may be configured to compare available twin configurations 16 stored in a catalogue of digital twins 17 of the twin abstraction interface. In case the catalogue of digital twins 17 comprises an available twin configuration 16 8 the twin abstraction interface 1 may setup a new twin module 10 to store twin data 9 of the twin 1 defined by the twin configuration 8.

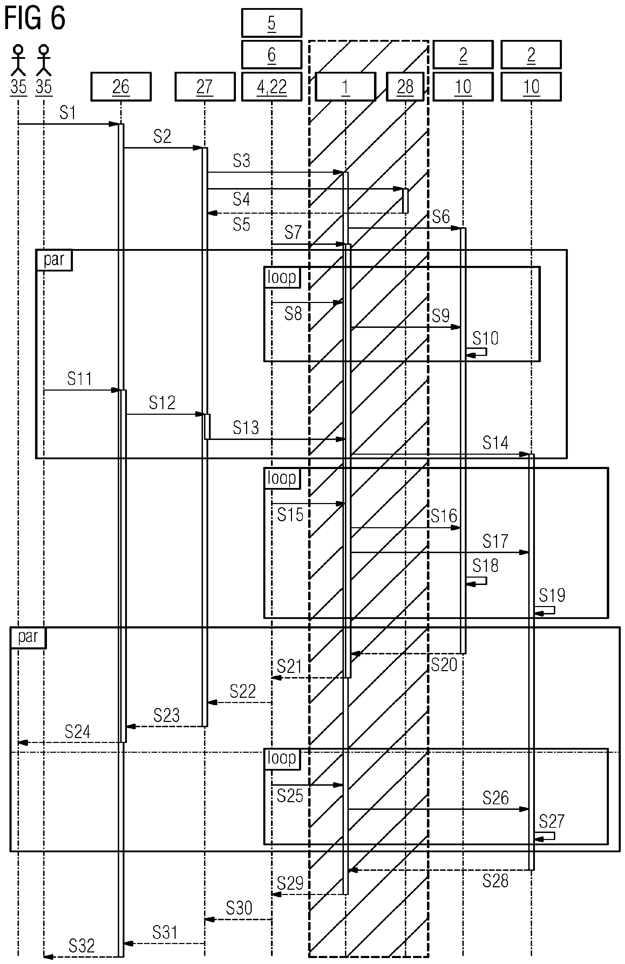

FIG 6 shows a schematic illustration of a method.

Two digital twin operators 35 are enabled to simultaneously connect to an intermediate layer to receive update data 11 to update their digital twins 2.

In a step S1 the first of the operators 35 may operate the production operator console 26 to create the twin intent 15.

In a step S2 the production operator console 26 may send the twin intent 15 to the monitoring network controller 27.

In a step S3 the monitoring controller 27 may configure the twin abstraction interface 1 by the transmission of the twin intent 15 to the network abstraction interface 1.

In a step S4 the monitoring network controller 27 may configure the monitoring network 28 according to the network twin intent 15.

In a step S5 upon successful configuration the monitoring network 28 may send a signal to the Monitoring Network Controller 27.

In a step S6 the network abstraction module may connect to the twin module 10 assigned to the digital twin 2. The connection may comprise a creation of the digital twin configuration 8 according to the digital twin intent 15.

In a step S7 the respective object modules 6 linked to the objects 5 of the production network 4 may connect to the network abstraction interface 1 to provide the update data 11.

While the first twin instance is active, a loop comprising steps S8, S9 and S10 may be performed to update the current state of the first digital twin 2.

In the step S8 the object module 6 of the respective object 5 of the real system 4 may generate update data 11 that depend on object data 7 describing a current state of the real object 5. The update data 11 may be provided to the twin abstraction interface 1 by the object module 6.

In the step S9 the twin abstraction interface 1 may adapt the update data 11 to the subsystem update data 13 according to the twin configuration 8. The twin abstraction interface 1 may send the subsystem update data 13 to the twin module 10.

In the step S10 the twin module 10 may receive the subsystem update data 13 and update the twin data 9 according to the subsystem update data 13. In this way, the current state of the first twin 2 may be updated. The subsystem update data 13 may be provided to the twin module 10 of the first twin 2 at an interval set by the twin configuration 8 until a termination of the first twin instance.

In a step S11, another operator 35 may configure a second twin configuration 8 at the production operator console 26. The second digital twin configuration 8 may comprise settings of the second twin 2 to be provided. The settings may determine the subsystem 3 comprising the real object 5 of the real system 4 to be represented by the second digital twin 2, settings of the twin data 9 and/or an update interval for synchronising the second twin 2 with the real object 5.

In a step S12, the production operator console 26 may send the generated twin configuration 8 to the monitoring network controller 27.

In a step S13 the monitoring network controller 27 may configure the twin abstraction interface 1 by the transmission of the twin intent 15 to the twin abstraction interface 1. The monitoring network controller 27 may configure the monitoring network 28 according to the network twin intent 15. Upon successful configuration the monitoring network 28 may send a signal to the monitoring network controller 27.

In a step S14 the twin abstraction interface 1 may connect to the twin module 10 assigned to the second digital twin 2. The connection may comprise a creation of the digital twin configuration 8 based on the digital twin intent 15.

While the first twin instance and the second twin instance are active, a loop comprising steps S15 to S19 may be performed to update the current state of the first digital twin 2.

In the step S15 the object modules 6 of the respective objects 5 of the real systems 4 may generate the update data 11 that depend on object data 7 describing a current state of the real object 5. The update data 11 may be provided to the twin abstraction interface 1 by the object modules 6.

In the step S16 the twin abstraction interface 1 may adapt the update data 11 to the subsystem update data 13 according to the twin configuration 8 of the first twin 2. The twin abstraction interface 1 may send the subsystem update data 13 to the twin module of the first twin 2.

In the step S17 the twin abstraction interface 1 may adapt the update data 11 to the subsystem update data 13 according to the twin configuration 8 of the second twin 2. The twin abstraction interface 1 may send the subsystem update data 13 to the twin module 10 of the second twin 2.

In the step S18 the twin module 10 of the first twin 2 may receive the subsystem update data 13 and update the twin data 9 of the first twin 2 according to the subsystem update data 13. In this way, the current state of the first twin 2 may be updated again.

In the step S19 the twin module 10 of the second twin 2 may receive the subsystem update data 13 and update the twin data 9 of the second twin 2 according to the subsystem update data 13. In this way, the current state of the second twin 2 may be updated again.

In a step S20 the first twin instance may be terminated, and the connection between the twin abstraction interface 1 and the digital twin module 10 may be disconnected.

In a step S21 the connection between the twin abstraction interface 1 and the object modules 6 of the objects 5 of the first subsystem 3 may be disconnected.

In a step S22 the object module 6 or the production network 4,22 may send a termination message to the monitoring network controller 27 that the connection between the twin abstraction interface 1 and the twin module 10 of the first twin instance has been terminated.

In a step S23 the monitoring network controller 27 may inform the production operator console 26 that the first twin instance has finished. The production operator console 26 can send a termination signal to the first and/or second operator 35 indicating that the twin instance has been terminated.

In step S24, the production operator console 26 may give the operators 35 an output indicating that the first twin instance has been terminated.

While the second twin instance is active, a loop comprising steps S25, S26 and S27 may be performed to update the current state of the second digital twin 2.

In the step S25 the object module 6 of the respective object 5 of the real system 4 may generate update data 11 that depend on object data 7 describing a current state of the real object 5. The update data 11 may be provided to the twin abstraction interface 1 by the object module 6.

In the step S26 the twin abstraction interface 1 may adapt the update data 11 to the subsystem update data 13 according to the twin configuration 8. The twin abstraction interface 1 may send the subsystem update data 13 to the twin module 10 of the second twin 2.

In the step S27 the twin module 10 of the second twin 2may receive the subsystem update data 13 and update the twin data 9 according to the subsystem update data 13. In this way, the current state of the second twin 2 may be updated. The subsystem update data 13 may be provided to the twin module 10 of the second twin 2 at an interval set by the twin configuration 8 until a termination of the second twin instance.

In a step S28 the second twin instance may be terminated, and the connection between the twin abstraction interface 1 and the digital twin module 10 of the second twin 2 may be disconnected.

In a step S29 the connection between the twin abstraction interface 1 and the object modules 6 of the objects 5 of the second subsystem 3 may be disconnected.

In a step S30 the object module 6 or the production network 4 may send a termination message to the monitoring network controller 27 that the connection between the twin abstraction interface 1 and the twin module 10 of the second twin 2has been terminated.

In a step S31 the monitoring network controller 27 may inform the production operator console 26 that the second twin instance has finished. The production operator console 26 can send a termination signal to the second Operator 35 indicating that the twin instance has been terminated.

In step S32, the production operator console 26 may give the second operator 35 an output indicating that the second twin instance has been terminated.

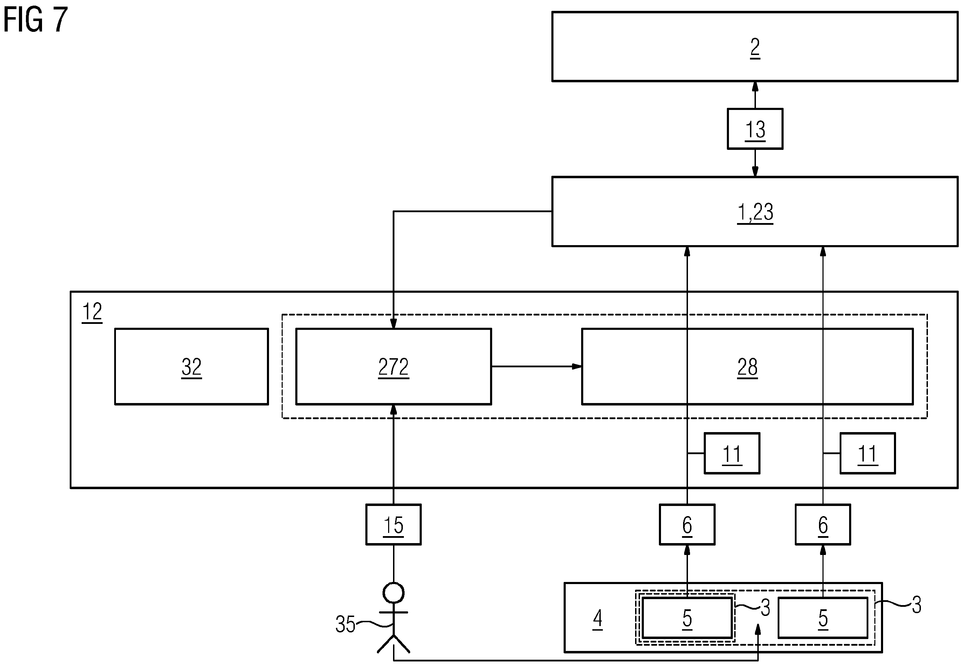

FIG 7 shows an integration of a digital twin abstraction interface into an existing network management system.

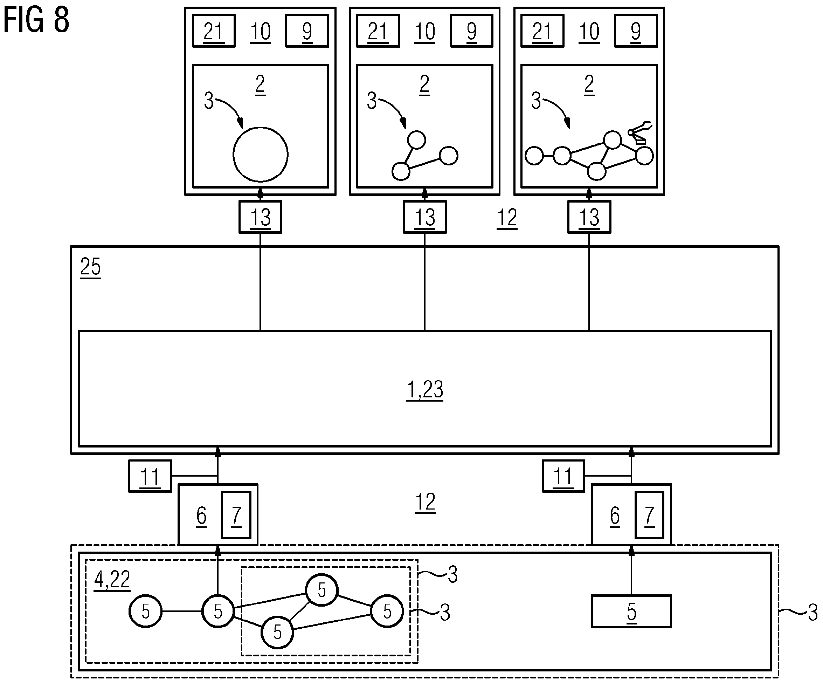

FIG 8 shows another integration of a digital twin abstraction interface into an existing network management system.

Here, the update data 11 can be fetched from the existing monitoring system or network management system 25. The monitoring system or network management system 25 is responsible for managing the connections to the physical computer network 22. Note, however, that the monitoring system or network management system 25 needs to connect to the physical computer network 22 infrastructure over a dedicated monitoring network 28. In this case, this invention can still take over the coordination with the monitoring-network controller.

The digital twin abstraction interface 1 can also be operated as part of an existing monitoring system or network management system 25. Note, however, in both cases it must be possible to configure the network connections between physical components like network and devices and the monitoring system or network management system 25. Furthermore, the digital twin abstraction interface 1 must be enabled to connect/forward update data 11 to the digital twins 2.

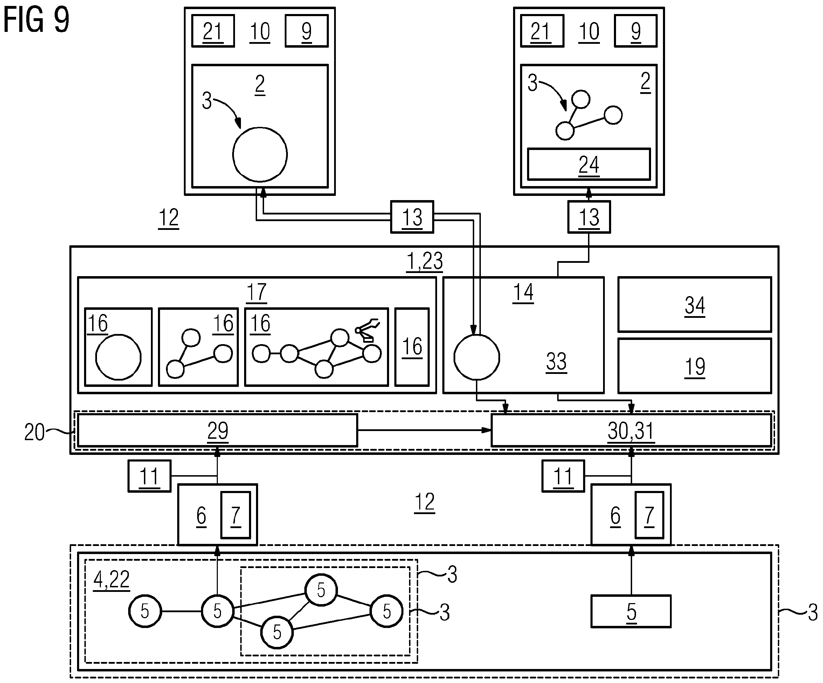

FIG 9 shows two modes of transmission of update data 11 to twin modules.

The digital twin abstraction interface 1 may also support the unfiltered forwarding of update data 11. Fig 9 shows how the core operation and management module 14 is forwarding monitoring update data 11 to the digital twin 2 instead of providing pre-processed update data 11. In this case, the digital twin 2 might bring its own update mechanism 24 to update its digital twin data 9 internally.

The digital twin abstraction interface 1 provides two modes of operations for digital twins 2. The left digital twin 2 shows the mode in which the digital twin operator 35 requests update behaviours for the digital twin 2 directly from the digital twin abstraction interface 1. The digital twin abstraction interface 1 is responsible for updating the current digital twin 2 internally. Here, only the in/out behaviour is communicated towards the digital twin 2. In the right mode of operation, the digital twin abstraction interface 1 forwards the update data 11 directly towards the digital twin 2. The digital twin 2 uses its own update logic 24 to process this update data 11 and to update the twin data 9.

The digital twin abstraction interface 1 can support multiple digital twins 2 with predictable and guaranteed performance.

The digital twin abstraction interface 1 can flexibly combine and abstract physical computer network 22 infrastructures according to the intentions of the digital twin operators 35. The digital twin abstraction interface 1 can be applied to manufacturing processes, for example, in relation to robotic arms and assembly line abstraction towards input/output process/mapping. The digital twin abstraction interface 1 can be used in relation to network alarms. The digital twin abstraction interface 1 can create digital twins 2 that abstract network segments for alarm patterns. The update data 11 can be provided through a tunnel where zero trust is equivalent to aggregation.

The catalogue of available twin configurations 17 of a physical infrastructure 4 allows faster utilisation of available digital twin configurations 16. The use of the twin abstraction interface 1 allows a centralised update mechanism to be provided. There is no need to provide twin modules 10 with their own update procedure 24. This means no redundancy, less use of resources and fewer potential sources of errors or bugs.

The digital twin abstraction interface 1 allows higher utilisation of a system of many digital twins 2, support for physical assets and a network connecting twins and assets, parallel and coordinated use of physical computer network 22 infrastructure and devices.

The digital twin abstraction interface 1 allows digital twin operators 35 to construct digital twins 2 with less overhead. The digital twins 2 may be constructed on demand at run time.

The digital twin abstraction interface 1 enables improved operation of systems consisting of digital twins 2, physical assets and networks connecting twins and assets. The design of the digital twin abstraction interface 1 results in less interference between twins, less overhead in the update process, and provides failure handling through the twin abstraction interface.

The digital twin abstraction interface 1 allows Metaverse-based based applications to use defined configuration mappings comprising configuration mappings, system performance KPIs, system differentiators, configuration as asset. Fidelity can be used as a KPI of the instantiated system and enables automated decision making for system operations.

## Claims

1. A method for linking a digital twin (2) to a subsystem (3) of a real system (4), wherein
- one or more objects (5) of the real system (4) are each connected to respective object modules (6), configured to provide object data (7) specifying a current state of the respective object (5);
- the digital twin (2) is linked to the subsystem (3), the subsystem (3) representing a selected group of the one or more objects (5) of the real system (4) defined by a twin configuration (8), wherein twin data (9) specifying a current state of the digital twin (2) are stored in a digital twin module (10);
- update data (11), depending on the object data (7), is provided by the respective object module (6);
**characterized in that**
- the update data (11) is received by a digital twin abstraction interface (1);
- the update data (11) is adapted to subsystem update data (13) according to the twin configuration (8) by a core operation and management module (14) of the digital twin (2) abstraction interface (1);
- the subsystem update data (13) is transmitted to the digital twin module (10); and
- the twin data (9) is updated dependent on the received subsystem update data (13) by the digital twin module (10).

2. Method according to claim 1, comprising steps of:
- receiving a twin intent (15) by the core operation and management module (14) of the digital twin abstraction interface (1) ;
- providing the twin configuration (8) according to the twin intent (15) by the core operation and management module (14); and
- creating the twin module (10) for storing the twin data (9) specifying the current state of the digital twin (2) according to the twin configuration (8) by the core operation and management module (14).

3. Method according to claim 2, comprising steps of:
- checking of available twin configurations (16), stored in a catalogue of digital twins (17) of the twin abstraction interface (1) for compatibility with the twin intent (15), by the core operation and management module (14);
- selecting one of the available twin configurations (16) compatible to the twin intent (15) by the core operation and management module (14); and
- providing the selected available twin configuration (16) as the twin configuration (8) by the core operation and management module (14).

4. Method according to claim 3, wherein the step of the provision of the twin configuration (8) comprises a step of:
- adapting the at least one compatible available twin configuration (16) to the twin configuration (8) depending on the twin intent (15).

5. Method according to claim 2, comprising steps of:
- checking of available twin configurations (16), stored in a catalogue of digital twins (17) of the abstraction interface (1) for a suitability for an inclusion in the twin configuration (8) to be provided according to the twin intent (15) by the core operation and management module (14);
- Selection of at least one of the suitable available twin configurations (16) by the core operation and management module (14); and
- providing the twin configuration (8) including the at least one suitable available twin configuration (16) as the twin configuration (8) by the core operation and management module (14) .

6. Method according to claim 2, comprising a step of:
- creating the twin configuration (8) according to the twin intent (15) by a creation Module (19) of the digital twin (2) abstraction interface (1).

7. Method according to one of the preceding claims, comprising a step of:
- configuring a network module (20) of the abstraction interface by the Core operation and management module (14) to provide the update data (11) to the core operation and management module (14) according to the at least one twin configuration (8) by the Core operation and management module (14).

8. Method according to one of the preceding claims, comprising a step of:
- storing at least part of the update data (11) in a network memory of the twin abstraction interface (1).

9. Method according to one of the preceding claims, comprising a step of:
- configuring the monitoring network (28) by the abstraction interface (1) to transmit at least part of the update data (11) of the object module (6) to the twin module (10).

10. Method according to one of the preceding claims, wherein the adaption of the update data (11) comprises a step of abstracting the update data (11) to the subsystem update data (11) according to a predefined level of abstraction (21) defined in the twin configuration (8) by the core operation and management module (14).

11. Method according to claim 10, wherein the adaption of the update data (11) comprises a pass-through of the update data (11) as the subsystem (3) update data to the object module (6) by the twin abstraction interface (1).

12. Method according to one of the preceding claims, comprising steps of:
- sending subsystem update data (11), depending on the twin data (9), to the digital twin (2) abstraction interface (1) by the digital twin module (10);
- receiving the subsystem update data (11) by the digital twin abstraction interface (1),
- adapting the subsystem update data (11) to update data (11) according to the twin configuration (8) by the core operation and management module (14) of the digital twin (2) abstraction interface (1),
- transmitting the update data (11) to the object module (6) via the communication network (12),
- receiving the update data (11) by the object module (6), and
- adapting the object data (7) dependent on the received update data (11) by the object module (6).

13. Method according to one of the preceding claims, wherein the one or more objects (5) of the real system (4) comprise at least one physical object (5).

14. Method according to one of the preceding claims, wherein the one or more objects (5) of the real system (4) comprise at least one digital asset.

15. A digital twin abstraction interface (1) configured for linking a digital twin (2) to a subsystem (3) of a real system (4), wherein the digital twin (2) abstraction interface (1) is configured to:
- receive update data (11) from an object module (6), wherein the update data (11) depend on object data (7) specifying a current state of an object (5) of the subsystem (3) connected to the object module (6),
- adapt the update data (11) to subsystem update data (13) according to a twin configuration (8) of the digital twin (2),
- send the subsystem update data (13) to a digital twin module (10) configured to store digital twin data (9) of the digital twin (2) linked to the subsystem (3).
